# EUROPÄISCHE PATENTSCHRIFT

(11) **EP 4 244 960 B1**
(45) Veröffentlichungstag und Bekanntmachung des Hinweises auf die Patenterteilung: **01.01.2025**
(21) Anmeldenummer: 21823723.8
(22) Anmeldetag: 12.11.2021
(51) Int. Cl.: H02K 15/00, H02K 21/24

(54) **VERFAHREN ZUM EINBAU EINER AXIALFLUSSMASCHINE**
METHOD FOR INSTALLING AN AXIAL FLUX MACHINE
PROCÉDÉ D'INSTALLATION D'UNE MACHINE À FLUX AXIAL

(30) Priorität: 13.11.2020 AT 509912020
(43) Veröffentlichungstag der Anmeldung: 20.09.2023
(73) Patentinhaber: Miba eMobility GmbH, 4663 Laakirchen (AT)
(72) Erfinder: ANDESSNER, Dietmar, 4625 Offenhausen (AT); DORFBAUER, Christian, 4040 Linz (AT); FRÜHWIRTH, Philipp Lucas, 4656 Kirchham (AT); RIEDL, Thomas, 4303 St. Pantaleon-Erla (AT); SANDNER, Christian, 4810 Gmunden (AT); STETINA, Gerold, 4840 Vöcklabruck (AT)
(74) Vertreter: Burger, Hannes
(86) Internationale Anmeldenummer: PCT/AT2021/060431
(87) Internationale Veröffentlichungsnummer: WO 2022/099344

(56) Entgegenhaltungen:
- EP-B1- 1 672 770
- DE-A1- 10 207 310
- US-A1- 2017 117 763

## Beschreibung

Die Erfindung betrifft ein Verfahren zum Einbau einer Axialflussmaschine mit mindestens zwei Aktivteilen in ein Motorengehäuse, wovon ein erstes Aktivteil als Rotor mit einer Anzahl von Permanentmagneten und ein zweites Aktivteil als Stator mit einer Anzahl von elektrischen Wicklungen eingerichtet ist, wobei der Rotor und der Stator einander benachbart und drehsicher, in einer Transportkonfiguration in einem platzsparenden, durch die magnetischen Anziehungskräfte der Permanentmagneten gebildeten, Paket, insbesondere in einem Stapel, angeordnet sind.

Aus dem Stand der Technik sind verschiedene Axialflussmaschinen bekannt. Diese elektrischen Maschinen zeichnen sich durch einfache Bauweise, geringes Gewicht und hohe Drehmomentdichte aus. Elektromaschinen stellen hohe Anforderungen an ihren Zusammenbau und Einbau. Es sind geringe Toleranzen vorgesehen und damit muss beim Einbau von diesen Maschinen mit hoher Präzision vorgegangen werden. Ferner sind Maschinen dieser Art empfindlich gegenüber Verschmutzungen. Mit minimalen Abständen zwischen Rotor und Stator und/oder anderen Aktivteilen ergeben sich so auch hohe Anforderungen an den Transport der Maschinen bzw. deren Teile.

Üblicherweise weisen Axialflussmaschinen mindestens zwei Aktivteile auf. Beispielsweise können zu einem scheibenförmigen Rotor ein oder mehrere Statoren vorgesehen sein. Der Rotor ist dabei üblicherweise mit einem oder mehreren Permanentmagneten ausgestattet. Der Permanentmagnet kann auch einteilig ausgeführt sein, wobei beispielsweise durch Magnetisierung mehrere Pole gebildet werden können. Zwischen dem Rotor und dem Stator ist ein Luftspalt vorgesehen. Am Stator sind entsprechenden Pole mit Spulenwicklungen ausgebildet, durch deren Bestromung ein geeignetes Magnetfeld ausgebildet wird. Durch die Wechselwirkung zwischen dem Magnetfeld des Stators und dem Magnetfeld des Rotors wird der Rotor bewegt und ein Drehmoment auf eine Rotorwelle übertragen.

Verschiedentlich sind aus dem Stand der Technik verschiedene Konzepte zur Transportsicherung von elektrischen Maschinen oder deren Teile bekannt. So ist beispielsweise aus der Veröffentlichung DE10207310A1 bekannt, den Stator mittels einer Aussparung an der Außenseite des Stators über eine Formschlussverbindung und damit die Relativlage von Stator zu Rotor zu fixieren.

Aus der Veröffentlichung EP1672770B1 ist ein rahmenloser Torque-Motor mit einer Transportsicherung bekannt. Dabei wird zwischen einem Primär- und einem Sekundärteil eine Transportsicherung als Abstandhalter vorgesehen.

Aus der Veröffentlichung US2017/0117763A1 ist ein Konzept einer speziellen Axialflussmaschine mit einem Verfahren zum Einbau derselben in ein Motorgehäuse bekannt, das sich in der Praxis jedoch als aufwendig gestaltet.

Die aus dem Stand der Technik bekannten Konzepte zu Axialflussmaschinen und insbesondere die Konzepte zum sicheren Transport und einfachen Einbau der Axialflussmaschine bzw. deren Teile erweisen sich in der Praxis als unzureichend, aufwendig und verbesserungswürdig.

Es ist eine der Aufgaben der vorliegenden Erfindung den Stand der Technik zu verbessern. Es ist eine weitere der Aufgaben der vorliegenden Erfindung das aus dem Stand der Technik bekannte Design einer Axialflussmaschine so weiter zu entwickeln, dass die Axialflussmaschine bzw. deren Aktivteile einfach transportiert und einfach und effizient in ein geeignetes Motorengehäuse eingebaut werden kann/können. Es ist eine der Aufgaben der Erfindung eine Axialflussmaschine nach dem Oberbegriff des Anspruchs 1 zu verbessern.

Die erfinderische Aufgabe wird nach dem kennzeichnenden Teil des Anspruchs 1 gelöst.

Nach einer besonderen Ausführungsform der Erfindung ist ein Verfahren zum Einbau einer Axialflussmaschine mit mindestens zwei Aktivteilen in ein Motorengehäuse vorgesehen, wovon ein erstes Aktivteil als Rotor mit einer Anzahl von Permanentmagneten und ein zweites Aktivteil als Stator mit einer Anzahl von elektrischen Wicklungen eingerichtet ist, wobei der Rotor und der Stator einander benachbart und drehsicher, in einer Transportkonfiguration in einem platzsparenden, durch die magnetischen Anziehungskräfte der Permanentmagneten gebildeten, Paket, insbesondere in einem Stapel, angeordnet sind, wobei der Rotor und der Stator in der Transportkonfiguration so unmittelbar benachbart angeordnet werden, dass zumindest in Teilbereichen des Rotors, der Rotor den angrenzenden Stator spielfrei ohne Luftspalt berührt und nachfolgend das Paket in das Motorgehäuse eingeführt und so in dem Motorengehäuse positioniert wird, dass danach mittels einerseits einem an dem Motorengehäuse angeordneten ersten mechanischen, insbesondere in Richtung der Rotorwelle, axialen Anschlages für zumindest eines der mindestens zwei Aktivteile und andererseits einem damit zusammenwirkendem an dem Motorengehäuse angeordneten ersten Zug- und/oder Druckelement, welches - gegen die magnetischen Anziehungskräfte der Permanentmagneten des Rotors zum Stator wirkend - den Abstand zwischen dem Rotor und dem Stator vergrößert, mindestens ein für den Betrieb der Axialflussmaschine erforderlicher Luftspalt zwischen dem Rotor und dem Stator einstellt wird.

Als Aktivteile werden definitionsgemäß alle jene Teile der Axialflussmaschine bezeichnet, die aktiv im Sinne der Erzeugung und Führung eines Magnetfeldes sind. Das sind einerseits Rotoren, Statoren und andere elektrisch/magnetisch aktive Teile, beispielsweise Bauteile für den magnetischen Rückschluss.

Beim Handling und der Montage von Rotoren sind besondere Vorkehrungen zu treffen, da einerseits zwischen dem Rotor, den Eisenbauelementen und anderen in der Umgebung positionierten Magneten starke Anziehungskräfte wirken und andererseits die permanenten Magneten des Rotors magnetischen Schmutz und Stäube anziehen.

Insbesondere wenn Aktivteile, beispielsweise Rotoren und/oder Statoren, einer Axialflussmaschine ohne Gehäuse geliefert werden, ist für den Kunden, der die Axialflussmaschine zusammenbaut und/oder in ein Motorengehäuse einbaut, eine einfache und effiziente Handhabung der Komponenten beim Zusammenbau der Axialflussmaschine von großer Bedeutung.

Nach einer besonderen Ausführungsform der erfinderischen Lösung wird eine Vormontage der Aktivteile in einer Weise durchgeführt, dass die Komponenten ohne Luftspalt gestapelt werden. Dadurch wird das Magnetfeld der Magnete weitgehend abgeschirmt und es gibt keine Fernwirkung des Magnetfeldes mehr. So kann das Handling beim Transport und Montage-Prozess wesentlich vereinfacht werden. Durch Einbringen der Lagerung in ein Gehäuse und Anziehen der axialen Befestigung stellen sich in der Folge nach einer Ausführungsform der Erfindung automatisch die Luftspalte ein. Ein getrenntes Handling der Komponenten ist nicht nötig. Ein weiterer Vorteil ist nach einer Ausführungsform der Erfindung, dass eine solche Vormontage einem sogenannten End-Of-Line (EOL) - Test unterzogen werden kann und dabei neben funktionellen Tests auch der Einbauprozess selbst beim Kunden nachgestellt werden kann.

Nach einer besonderen Ausführungsform der Erfindung ist der Rotor durch die magnetischen Anziehungskräfte zwischen den Permanentmagneten des Rotors und dem magnetischen Material in den anderen Aktivteilen positionssicher, insbesondere drehsicher und/oder verschiebungssicher in dem Paket angeordnet. Als drehsicher wird, in diesem Zusammenhang definitionsgemäß, eine Anordnung bezeichnet, in welcher der Rotor durch die anderen Komponenten an einer relativen Drehung, relativ zu den anderen Aktivteilen, behindert wird. In diesem Sinne erfolgt durch die magnetische Anziehung ein, zumindest teilweiser, Kraftschluss, insbesondere durch Wirkung von Reibung, zwischen den Aktivteilen.

Nach einer besonderen Ausführungsform der Erfindung ist es durch das erfindungsgemäße Verfahren möglich das Auftreten von Streufelder am Rotor zu vermindern und durch den direkten Kontakt der Aktivteile kann eine Verschmutzung des Rotors an den Kontaktflächen wesentlich vermindert oder verhindert werden.

Erfindungsgemäß kann der Stator und/oder der Rotor eine zumindest teilweise Umspritzung mit einem Kunststoff und/oder einem thermoplastischen Material aufweisen. Eine solche Umspritzung ist integral verbunden und verbleibt auch im Betrieb am Aktivteil haften.

Erfindungsgemäß weist die Oberfläche der kontaktierenden Aktivteile eine gewisse Unebenheit bzw. Rauheit auf. Aus diesem Grund wird ein solcher Kontakt zwischen den Aktivteilen niemals komplett flächig ausgebildet sein. Ferner kann vorgesehen sein, dass die Oberfläche der Aktivteile eine vorbestimmte geometrische Ausformung, beispielsweise konische geformte Oberflächenanteile, und/oder Struktur, beispielsweise mit vorstehenden Rippen, aufweist. In einem solchen Fall wird die Kontaktierung über diese Struktur bzw. deren Elemente, insbesondere der Rippen, hergestellt.

Nach einer besonderen Ausführungsform der Erfindung berühren der Rotor und der Stator in der Transportkonfiguration über einen Anteil von mindestens 20%, mindestens 50% oder mindestens 80% der im Paket gegenüberliegenden Flächenanteile einander flächig ohne Luftspalt.

Nach einer besonderen Ausführungsform sind zwischen den spielfrei sich kontaktierenden Aktivteilen keine Abstandshalter angeordnet.

Nach einer besonderen Ausführungsform der Erfindung werden die zumindest zwei Aktivteile der Axialflussmaschine beim Einbau und/oder Montage in dem Motorengehäuse von der paketartigen Transportkonfiguration beginnend teleskopartig voneinander entfernt. Dabei werden die für den Betrieb der Axialflussmaschine wesentlichen Luftspalte zwischen dem/den Rotor/Rotoren und den weiteren Aktivteilen eingestellt.

Nach einer besonderen Ausführungsform der Erfindung ist der Einbauraum des Motorengehäuses für die Positionierung der Axialflussmaschine topfförmig ausgeführt und wird das Paket der mindestens zwei Aktivteile in der Transportkonfiguration von einer ersten Seite in den so gebildeten zumindest teilweise hohlförmigen Einbauraum des Motors so eingeführt, so dass zumindest der Bereich der Berührung zwischen Stator und Rotor seitlich von dem Motorengehäuse abgedeckt ist. Hierdurch werden die Aktivteile von Staub und/oder anderen Verunreinigungen und/oder Beschädigungen geschützt. Nach einer weiteren Ausführungsform werden dadurch auch magnetische Streufelder der magnetisch aktiven Teile minimiert.

Nach einer besonderen Ausführungsform der Erfindung wird zumindest eines der mindestens zwei Aktivteile der Axialflussmaschine über das erste Zug- und/oder Druckelement in dem Motorengehäuse befestigt. Nach einer besonderen Ausführungsform ermöglicht die Erfindung damit das Befestigen und/oder Positionieren aller Aktivteile in einem Arbeitsgang.

Nach einer besonderen Ausführungsform der Erfindung ist das erste Zug- und/oder Druckelement als Teil einer Schraubverbindung ausgeführt.

Nach einer besonderen Ausführungsform der Erfindung wird der Stator über den ersten Anschlag im Einbauraum des Motorengehäuses positioniert. Das erste Zug- und/oder Druckelement vergrößert dabei durch Ausübung einer Zug- und/oder Druckkraft von der, der Seite des Einführens des Paketes in das Motorengehäuse, gegenüberliegenden Seite des Motorengehäuses auf den Rotor den Abstand zwischen Rotor und Stator, wodurch der mindestens eine für den Betrieb der Axialflussmaschine erforderliche Luftspalt zwischen Stator und Rotor eingestellt wird.

Nach einer besonderen Ausführungsform der Erfindung weisen die zumindest zwei Aktivteile als weiteres Aktivelement ein Rückschlusselement auf, das in dem Paket der Transportkonfiguration auf der dem Stator gegenüberliegenden Seite des Rotors angeordnet wird. Nach der Positionierung des Pakets im Motorengehäuse wird das Rückschlusselement durch das erste Zug- und/oder Druckelement und/oder ein weiteres Zug und/oder Druckelement von dem Rotor entfernt, wodurch ein weiterer Luftspalt des mindestens einen für den Betrieb der Axialflussmaschine erforderliche Luftspalt in diesem Fall zwischen Rotor und Rückschlusselement eingestellt wird.

Die Erfindung ist nach einer weiteren Ausführungsform ferner durch eine Transportkonfiguration der Aktivteile einer Axialflussmaschine zur Verwendung in einem Verfahren nach einem der vorhergehenden Ansprüche 1 bis 6 gekennzeichnet.

Die Erfindung ist nach einer weiteren Ausführungsform ferner durch eine Axialflussmaschine in einem Motorgehäuse, welches über ein Verfahren nach einem der Ansprüche 1 bis 6 in das Motorgehäuse eingebaut ist, gekennzeichnet.

Nach einer besonderen Ausführungsform der Axialflussmaschine sind die Aktivteile in der Transportkonfiguration in der Reihenfolge des Einbaus und/oder dem Montagehandling entsprechend angeordnet.

Durch diese Maßnahme ist der Einbau der Aktivteile besonders effizient und zeitsparend möglich.

Nach einer weiteren besonderen Ausführungsform der Axialflussmaschine ist eine Rotorwelle vorgesehen. Das Paket der Aktivteile ist in der Transportkonfiguration bereits auf der Rotorwelle angeordnet.

Durch diese Maßnahme vereinfacht sich der Einbau der Aktivteile bzw. der Axialflussmaschine wesentlich.

Nach einer weiteren möglichen Ausführungsform der Erfindung ist an einem ersten der mindestens zwei Aktivteile ein mechanischer Anschlag vorgesehen, der mit einem mechanischen Anschlag im Motorengehäuse zusammenwirken kann, um damit die Einbauposition des ersten Aktivteiles im Motorengehäuse zu definieren.

Nach einer weiteren möglichen Ausführungsform der Erfindung ist eine Rotorwelle vorgesehen und wird über das Zug/Druck-Element im Zusammenspiel mit dem mechanischen Anschlag im Motorengehäuse bei Einbau des Pakets in das Motorengehäuse über eine Zug- oder Druckkraft, die gegen die magnetischen Anziehungskräfte der Permanentmagneten in Richtung der Achse der Rotorwelle wirkt, ausgeübt, so dass sich, insbesondere am Rotor eine oder mehrere Luftspalte bilden.

Nach einer weiteren möglichen Ausführungsform der Erfindung weist das Zug/Druck-Element einen Stellmechanismus, vorzugsweise mit einem Gewinde, auf.

Nach einer weiteren Ausführungsform kann durch den Stellmechanismus der und/oder die Luftspalte eingestellt werden.

Nach einer weiteren möglichen Ausführungsform der Erfindung ist das erste Aktivteil als ein Stator, das zweite Aktivteil als Rotor eingerichtet und ein drittes Aktivteil als Rückschlussteil, zur Verwirklichung des magnetischen Rückschlusses, vorgesehen.

Nach einer weiteren möglichen Ausführungsform ist die Erfindung durch eine Axialflussmaschine mit einem ersten Aktivteil, das als Stator und einem zweiten Aktivteil, das als Rotor mit einer Anzahl von Permanentmagneten und einem dritten Aktivteil, das als Rückschlussteil ausgeführt ist, gekennzeichnet. Dabei sind die Aktivteile einander benachbart, insbesondere angrenzend, in einer Transportkonfiguration in einem platzsparenden, durch die magnetischen Anziehungskräfte der Permanentmagneten gebildeten, Paket, insbesondere in einem Stapel, so angeordnet, dass der Rotor zwischen dem Stator und dem Rückschlussteil durch die magnetischen Anziehungskräfte der Permanentmagneten des Rotors vorzugsweise drehsicher angeordnet ist. Die Erfindung ist nach einer besonderen Ausführungsform dadurch gekennzeichnet, dass ein mechanischer Anschlag am Stator vorgesehen ist, der mit einem einer axialen Anschlagsfläche im Motorengehäuse zusammenwirkt und der Rückschlussteil ebenfalls eine axiale Anschlagsfläche aufweist, die mit einer weiteren axialen Anschlagsfläche im Motorengehäuse zusammenwirkt. Über ein Zug-/Druckelement, beispielsweise eine Verschraubung, wird damit ein Stellmechanismus verwirklicht, über den, beispielsweise mit einem Gewinde auf das Rückschlussteil bei der Montage im Motorengehäuse mit der, von dem Zug/Druck-Element ausgeübten, Zug- und/oder Druckkraft von dem Rotor in axialer Richtung entfernt werden kann, so dass zwischen dem Rotor und dem Rückschlussteil ein Luftspalt einstellbar ist. Ferner wird durch Verschieben der Welle und dem daran befestigten Rotor, wobei diese Verlagerung der Welle insbesondere durch das Rückschlussteil, zwischen Stator und Rotor ein weiterer Luftspalt erzeugt, so dass der Rotor im montierten Zustand im Motorengehäuse drehbar ist.

Nach einer besonderen Ausführungsform der Axialflussmaschine ist eine Rotorwelle vorgesehen und das Paket der Aktivteile ist in der Transportkonfiguration bereits auf der Rotorwelle angeordnet.

Nach einer besonderen Ausführungsform der Erfindung ist eine Axialflussmaschine mit einem ersten Aktivteil, das als ein erster Stator und einem zweiten Aktivteil, das als Rotor mit einer Anzahl von Permanentmagneten und mit einem dritten Aktivteil, das als zweiter Stator ausgeführt ist, vorgesehen. Dabei sind die Aktivteile einander benachbart, insbesondere angrenzend, in einer Transportkonfiguration in einem platzsparenden, durch die magnetischen Anziehungskräfte der Permanentmagneten gebildeten, Paket, insbesondere in einem Stapel, so angeordnet, dass zwischen dem ersten und zweiten Stator der Rotor durch die magnetischen Anziehungskräfte der Permanentmagneten vorzugsweise drehsicher angeordnet ist. Nach einer besonderen Ausführungsform der Erfindung ist sowohl für den ersten als auch den zweiten Stator ein mechanischer Anschlag im Motorengehäuse vorgesehen. Nach einer weiteren Ausführungsform ist ein Zug- und/oder Druckelement, beispielsweise eine Verschraubung vorgesehen, wodurch der zweite Stator bei Montage mit der, von dem Zug- und/oder Druckelement ausgeübten, Zug- und/oder Druckkraft von dem Rotor entfernt werden kann, so dass sich zwischen dem ersten Stator und dem Rotor einerseits und dem Rotor und dem zweiten Stator andererseits jeweils ein Luftspalt einstellt und der Rotor im montierten Zustand im Motorengehäuse drehbar wird.

Nach einer weiteren möglichen Ausführungsform der Erfindung ist eine Axialflussmaschine mit einem ersten Aktivteil, das als Stator eingerichtet ist und einem zweiten Aktivteil, das als Rotor mit einer eine Anzahl von Permanentmagneten eingerichtet ist, vorgesehen, wobei die beiden Aktivteile einander benachbart, insbesondere angrenzend in einer Transportkonfiguration in einem platzsparenden, durch die magnetischen Anziehungskräfte der Permanentmagneten gebildeten, Paket, insbesondere in einem Stapel, so angeordnet sind, dass der Rotor durch die magnetischen Anziehungskräfte vorzugsweise drehsicher mit dem Stator verbunden ist und eine Rotorwelle vorgesehen ist, auf welcher der Rotor angeordnet ist. Nach einer besonderen Ausführungsform ist die Erfindung dadurch gekennzeichnet, dass ein mechanischer, insbesondere axialer, Anschlag im Motorengehäuse vorgesehen ist, welcher mit der Rotorwelle zusammenwirkt, so dass beispielsweise, insbesondere einer Lagerung der Rotorwelle über den Anschlag positioniert wird. Nach einer weiteren Ausführungsform ist ein Zug- und/oder Druckelement, insbesondere mit einem Stellmechanismus, beispielsweise einem Gewinde, vorgesehen, wodurch der Stator bei Montage im Motorengehäuse mit einer Zugkraft des Zug- und/oder Druckelements von dem Rotor axial, gegen die Anziehungskräfte der Permanentmagneten und gegen den Anschlag bzw. die Anschläge, insbesondere in Richtung der Rotorwellenachse, entfernt werden kann, so dass sich zwischen dem Stator und dem Rotor ein Luftspalt einstellt und der Rotor im montierten Zustand im Motorengehäuse drehbar wird.

Nach einer weiteren möglichen Ausführungsform ist die Erfindung durch ein Verfahren zum Einbau einer Axialflussmaschine gekennzeichnet, wobei die Aktivteile der Axialflussmaschine einander benachbart, insbesondere angrenzend, in einer Transportkonfiguration in einem platzsparenden, durch die magnetischen Anziehungskräfte der Permanentmagneten gebildeten, Paket, insbesondere in einem Stapel, transportiert werden, wobei der Rotor durch die magnetischen Anziehungskräfte der Permanentmagneten vorzugsweise drehsicher in dem Paket der Aktivteile angeordnet ist und nachfolgend das Paket in das Motorengehäuse eingelegt wird, wobei zumindest eines der Aktivteile eine einen mechanischen Anschlag für einen entsprechendne Anschlag im Motorengehäuse aufweist und ein Zug- und/oder Druckelement, beispielsweise eine Verschraubung im Motorengehäuse vorgesehen ist, die so ausgestaltet ist, dass bei Montage des Pakets der Aktivteile in das Motorengehäuse die Aktivteile durch Ausübung einer Zug- und/oder Druckkraft, die gegen die magnetischen Anziehungskräfte der Permanentmagneten wirkt und mit dem Anschlag zusammenwirkt, voneinander getrennt werden und sich dabei durch die Montage ein Luftspalt zwischen dem Rotor und den anderen Aktivteilen eingestellt wird und der Rotor im montierten Zustand im Motorengehäuse drehbar wird.

Mögliche Ausführungsformen der Erfindung sind anhand mehrerer schematischen Zeichnungen, wie folgt, näher erläutert. Es zeigen:
Fig. 1 zeigt eine erste mögliche Ausführungsform der erfindungsgemäßen Vorrichtung in einem Transportzustand
Fig. 2 zeigt die erste Ausführungsform der erfindungsgemäßen Vorrichtung in einem ersten Zustand bei Einbau und vor dem Fixieren bzw. In-Position-bringen der Aktivteile in ein Motorengehäuse
Fig. 3 zeigt die erste Ausführungsform der erfindungsgemäßen Vorrichtung im eingebauten Zustand mit betriebsfertig positionierten Aktivteilen in einem Motorengehäuse
Figuren 4a und 4b zeigen schematische Darstellungen von möglichen grundlegenden Prinzipien der Ausnützung der Positionierhilfen bei exemplarischen Ausführungsformen der vorliegenden Erfindung
Figuren 5a bis 5d verschiedene Konfigurationen von Axialflussmaschinen, die durch die vorliegende Erfindung umfasst sind
Fig. 6 eine mögliche Konfiguration zum Einbau einer Variante einer Axialflussmaschine in ein Motorengehäuse
Fig. 7 eine zweite mögliche Konfiguration zum Einbau einer weiteren Variante einer Axialflussmaschine in ein Motorengehäuse
Fig. 8 eine dritte mögliche Konfiguration zum Einbau einer weiteren Variante einer Axialflussmaschine in ein Motorengehäuse

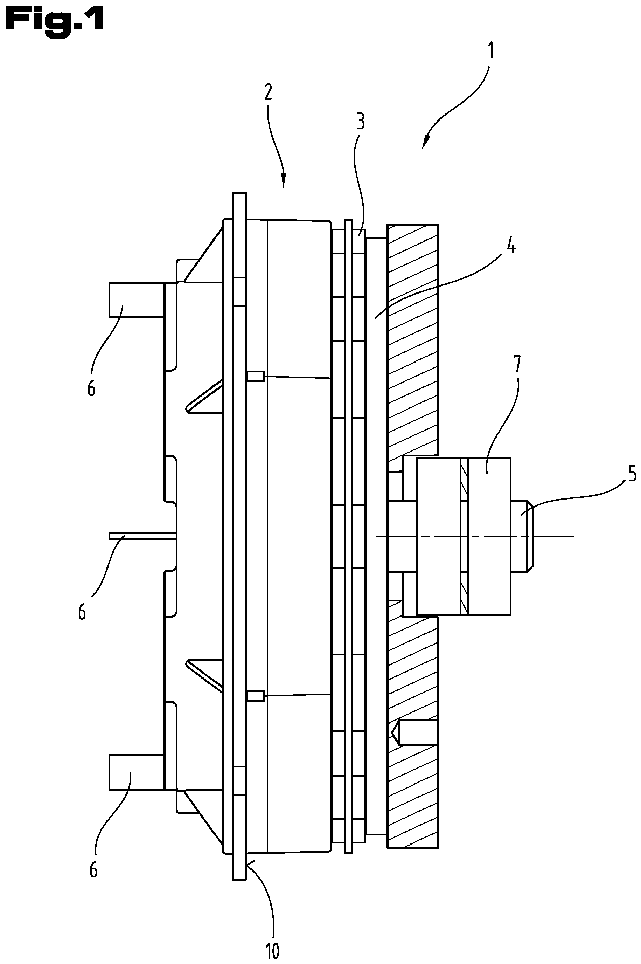

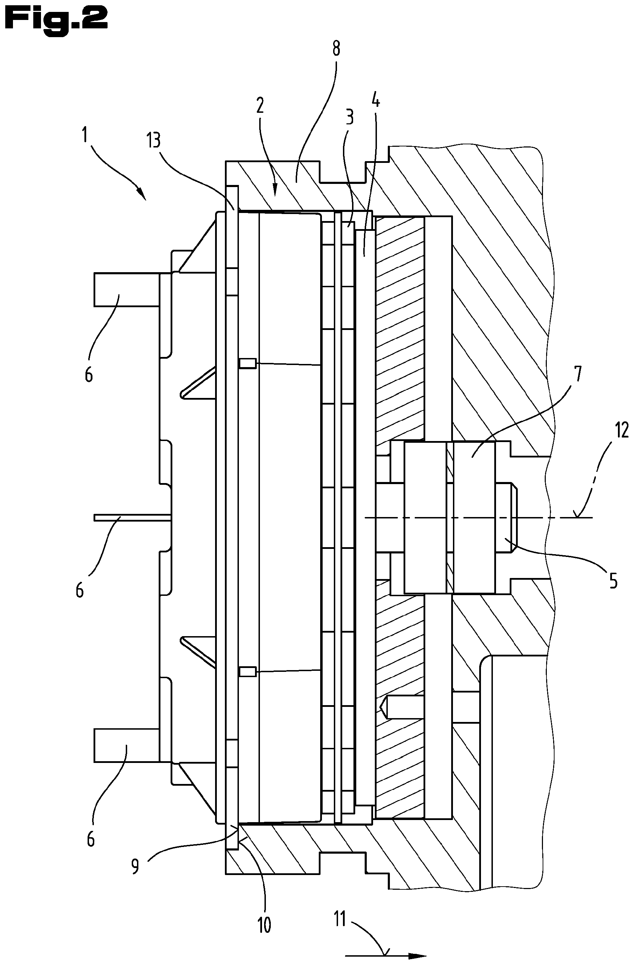

In Fig. 1 ist eine Axialflussmaschine 1 teilweise in einer schematischen, isometrischen Projektion dargestellt und teilweise als Schnitt gezeigt. Dabei ist in der schematischen Darstellung ein Stator 2, ein Rotor 3, sowie ein Rotorrückschluss 4 gezeigt. Wie aus Fig. 1 ersichtlich ist liegen Stator 2, Rotor 3 und Rotorrückschluss 4 aufeinander auf, d.h. zwischen Rotor 3 und Stator 2 einerseits und Rotor 3 und Rotorrückschluss 4 ist kein Luftspalt gegeben, wobei sich ein flächiger Kontakt zwischen diesen Aktivteiles der Axialflussmaschine ergibt, soweit das aufgrund von Oberflächenrauhigkeiten und mangelnder Planheit der Oberflächen möglich ist. Die Aktivteile der Elektromaschine sind in einem kompakten Paket, gleich einem Stapel, angeordnet. Durch die Permanentmagneten des Rotors 3 und die magnetischen Werkstoffe am Stator 2 und/oder Rotorrückschluss 4 werden magnetische Anziehungskräfte wirksam, die zur Ausbildung des Paketes in der Transportkonfiguration führen und insbesondere, nach einer besonderen Ausführungsform, den Rotor und/oder die anderen Aktivteile auch aufgrund Reibung drehsicher bzw. drehfest, aber auch gegen Verschiebung, insbesondere zumindest teilweise spielfrei, in diesem Stapel zumindest teilweise fixieren. Wie aus Fig. 1 ersichtlich ist in diesem Paket auch bereits eine Rotorwelle 5 vorgesehen. Nach einer möglichen Ausführungsform ist beispielsweise der Rotor 3 auf die Welle aufgepresst oder in anderer Form mit der Rotorwelle verbunden, während eines der anderen beiden Aktivteile oder beide Aktivteile beispielsweise noch verschiebbar auf und/oder verschiebbar gegenüber der Welle angeordnet sind. Der Vollständigkeit halber zeigt Fig. 1 schematisch noch die elektrischen Anschlüsse 6 des Stators sowie Lager 7 der Rotorwelle. In Fig. 2 ist in der Folge ein erster Zustand beim Einbau der Axialflussmaschine 1 in ein Motorgehäuse 8 gezeigt. Wie in Fig. 2 ersichtlich weist das Gehäuse 8 einen mechanischen Anschlag 9 auf, der mit einem mechanischen Anschlag 10 des Stators 2 bzw. des Gehäuses des Stators zusammenwirkt. In Fig. 2 sind die beiden mechanischen Anschläge in Kontakt und bestimmen so bereits die Endposition des Stators 2 in Einbaurichtung 11, die parallel zur Rotorwellenachse 12 orientiert ist. Der mechanische Anschlag 10 des Stators 2 ist Teil einer Positionierhilfe der Axialflussmaschine. Diese Positionierhilfe kann mannigfaltig ausgestaltet sein und wird hier anhand von Ausführungsbeispielen nur beispielhaft und nicht-einschränkend erläutert. In der vorgestellten beispielhaften Ausführungsform weist die Positionierhilfe den gezeigten mechanischen Anschlag des Stators im Motorengehäuse 8 auf. Der mechanische Anschlag 10 des Stators 2 kann beispielsweise als Ring 13 am Gehäuse des Stators 2 ausgeführt sein. Der Ring weist dann eine axial angeordnete geeignete Anschlagskontur bzw. Anschlagsfläche auf, die mit einem als Gegenanschlag ausgeführten mechanischen Anschlag 9 des Motorengehäuses 8 zusammenwirkt. Wie aus Fig. 2 ersichtlich sind die Aktivteile der Axialflussmaschine in diesem Zustand noch immer in dem Stapel angeordnet, d.h. dass der Rotor 3 noch immer ohne Luftspalt durch die magnetischen Kräfte an dem Stator 2 und dem Rotorrückschluss 4 anliegt. Wie dargestellt ist das Motorengehäuse 8 mit einer topfförmigen Einbauraum ausgestattet. Dabei decken seitliche Teile des Motorengehäuses zumindest teilweise Aktivteile und/oder Luftspalte, die sich im eingebauten, positionierten Zustand der Axialflussmaschine im Motorengehäuse ergeben, ab. Topfförmig gestaltete Einbauräume schützen einerseits die eingebaute Maschine optimal und vereinfachen andererseits den betriebsbereiten Einbau bzw. Zusammenbau einer solchen Axialflussmaschine.

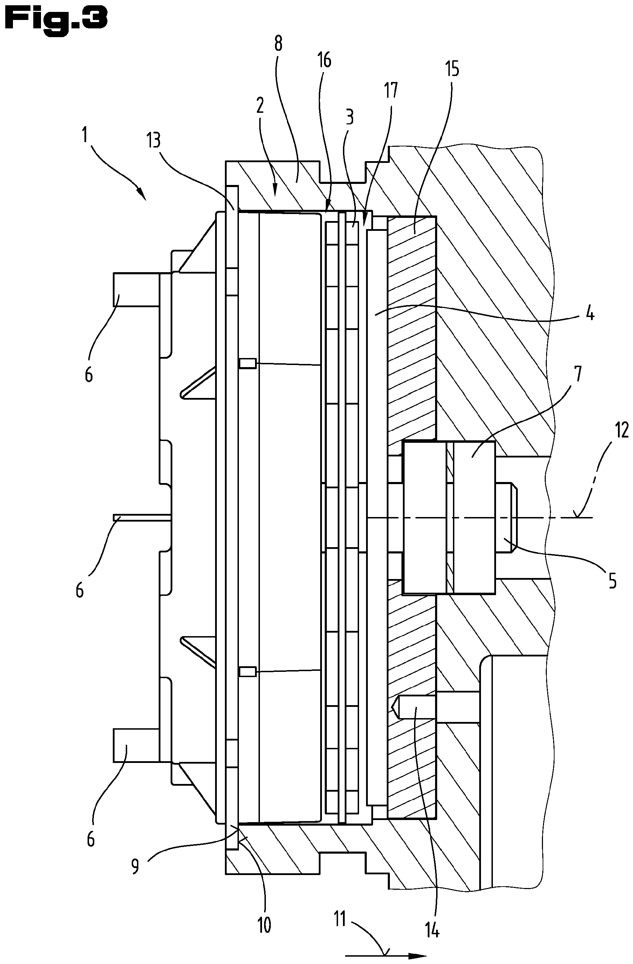

In Fig. 3 ist die Axialflussmaschine 1 schließlich in das Motorgehäuse 8 eingebaut bzw. völlig integriert. Während der Stator 2 bereits in einem vorhergehenden Montageschritt, wie in Fig. 2 dargestellt, insbesondere über den mechanischen Anschlag im Motorengehäuse, positioniert wurde, werden in Fig. 3 durch eine Verschraubung 14 der Rotor 3 sowie der Rotorrückschluss 4 in eine Endposition gebracht. Während der Haltemechanismus den Stator 2 in Position hält, wird durch den Stellantrieb mit dem Gewinde der Verschraubung 14 ein Zug/Druck-Mechanismus verwirklicht, der in Zusammenwirkung mit dem Haltemechanismus die Aktivteile in ihre Endpositionen bringt. Die Verschraubung 14 greift dabei an einer an dem Rotorrückschluss 4 angeordneten und mit dem Rotorrückschluss 4 fest verbundenen Ankerplatte 15 an und zieht, abgestützt über den Anschlag des Stators am Anschlag am Motorgehäuse 5, die Ankerplatte mitsamt Rotorrückschlussplatte sowie die Rotorwelle 5 mitsamt Rotor 3 in die Einbaurichtung 11. In einem ersten Schritt bildet sich dabei durch Bewegung des Rotorrückschlusses bzw. der Ankerplatte der Luftspalt 17 aus. In einem zweiten Schritt wird das Lager 7 durch die Ankerplatte in seine Endposition (siehe Figur 3) bewegt, wodurch sich durch Verschieben der Rotorwelle 5 und des an der Rotorwelle 5 befestigten Rotors 3 der Luftspalt 16 ausbildet. Dabei müssen mit dem Stellmechanismus des Zug- und/oder Druckelementes, insbesondere der Verschraubung 14, das in diesem Fall eine Zugkraft ausübt, die Magnetkräfte zwischen Stator 2 und Rotor 3 sowie Rotorrückschluss 4 und Rotor 3 überwunden werden. In der finalen Einbausituation bilden sich so der Luftspalt 16 zwischen Stator 2 und Rotor 3 einerseits und der Luftspalt 17 zwischen dem Rotor 3 und dem Rotorrückschluss 4 andererseits aus. Ausgehend von der schematischen Darstellung in Fig. 2 bildet sich somit durch den Abstand zwischen der Ankerplatte 15 und dem Gehäuse (in Richtung der Wellenachse hin zum Lager 7) durch Verschiebung der Ankerplatte 15 die Luftspalte 16 und 17 zwischen Rotor und Stator sowie Rotor und Rotorrückschluss, wie in Fig. 3 nur schematisch dargestellt, aus. Die Summe der Breite der Luftspalte in Fig. 3 ergibt deshalb entsprechend einer bevorzugten Ausführungsform den lagerseitigen Abstand zwischen dem Gehäuse und der Ankerplatte.

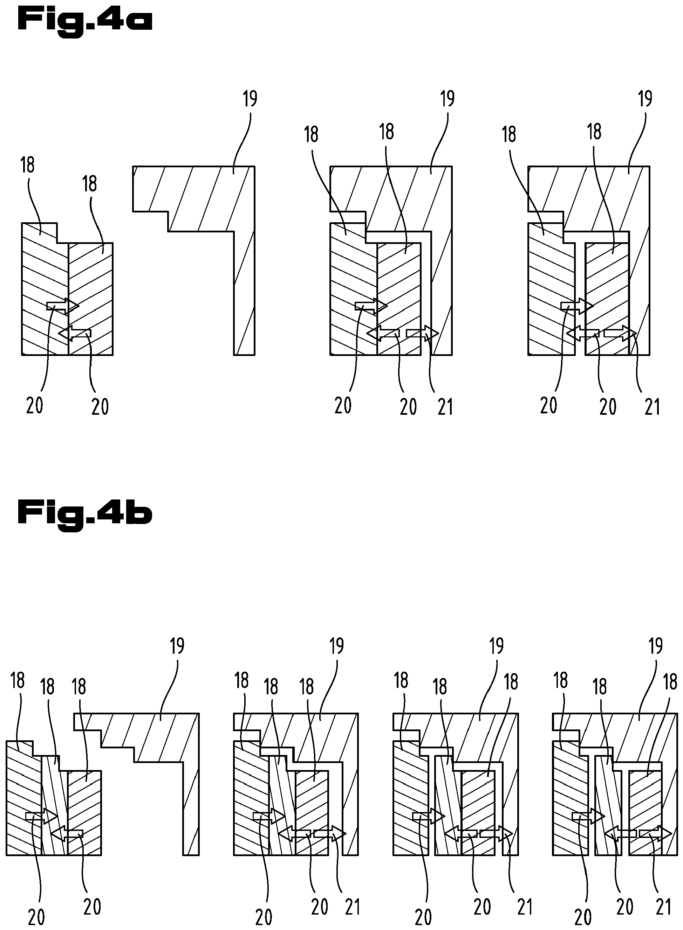

In den Fig. 4a und Fig. 4b sind grundlegende Prinzipien möglicher Ausführungsformen der vorliegenden Erfindung schematisch dargestellt. Dabei ist eine Axialflussmaschine mit Aktivteilen 18 und einem Gehäuse 19 dargestellt. Während in Fig. 4a eine Konfiguration einer Axialflussmaschine mit 2 Aktivteilen schematisch dargestellt ist, zeigt Fig. 4b schematisch eine Konfiguration einer Axialflussmaschine mit 3 Aktivteilen. Die Aktivteile 18 werden dabei in einer Transportkonfiguration durch magnetische Anziehungskräfte 20 in der Transportkonfiguration, jeweils im linken Teil der Abbildung, in einem kompakten Paket, insbesondere einem Stapel gehalten. Die Axialflussmaschine weist verschiedene Anschläge für den Einbau des Pakets der Aktivteile in dem Motorgehäuse auf. Zudem ist ein Zug und/oder Druckelement (nicht dargestellt) durch welche die Aktivteile bei Einbau bzw. Fixierung im Motorengehäuse die Aktivteile teleskopartig auseinandergezogen werden. Beim Einbau der Aktivteile 18 in das Gehäuse werden durch Zugkräfte 21 des Zug/Druck-Elementes (nicht dargestellt), beispielsweise über eine Verschraubung des Aktivteils am Motorengehäuse, die magnetischen Anziehungskräfte zumindest teilweise überwunden. Durch das Zusammenwirken der Zugkräfte mit dem Haltemechanismus, beispielsweise durch den Anschlag eines Aktivteils am Motorengehäuse in axialer Einbaurichtung, stellen sich die Luftspalte zwischen den Aktivteilen, beispielsweise zwischen Rotor und Stator, ein.

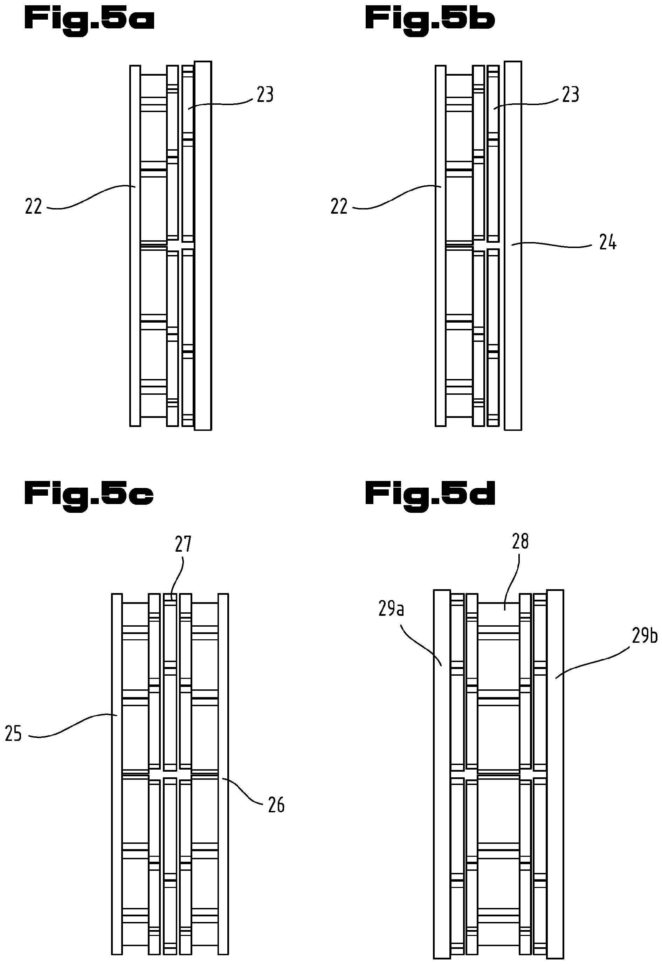

In den Figuren 5a bis 5d sind verschiedene Konfigurationen von Axialflussmaschinen ersichtlich, die durch die vorliegende Erfindung umfasst sind. Es zeigen Figur 5a eine Konfiguration mit einem Stator 22 und einem Rotor 23, Figur 5b eine Konfiguration mit einem Stator 22 einem Rotor 23 und einem Rotorrückschlussteil 24, Figur 5c eine Konfiguration mit zwei Statoren 25 und 26 sowie einem dazwischen angeordneten Rotor 27, Figur 5d einen Stator 28 angeordnet zwischen zwei Rotoren 29a und 29b.

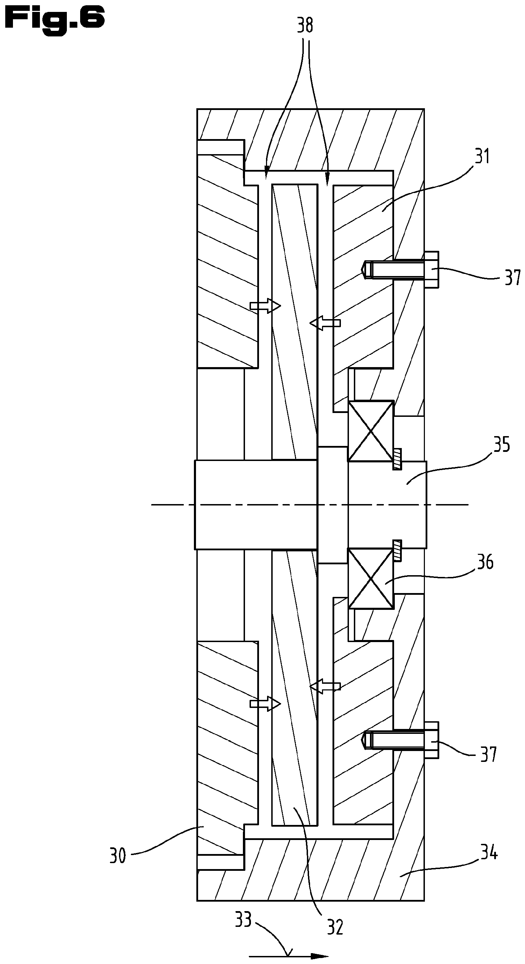

In Fig. 6 ist eine Konfiguration zum Einbau einer Variante einer Axialflussmaschine mit einem Stator 30, einem zweiten Stator 31 und einem dazwischen angeordneten Rotor 32 in ein Motorengehäuse 34 gezeigt.

Der erste Stator 30 wird dabei in Einbaurichtung 33 durch einen axialen Anschlag im Motorengehäuse 34 fixiert. Der Rotor 32 wird durch die Rotorwelle 35 und ein geeignetes Lager 36 ebenfalls im Motorengehäuse 34, beispielsweise durch Einsetzen der Rotorwelle 35 in das, in das Motorengehäuse 34 eingepresste, Lagers 36, in Einbaurichtung 33 positioniert, während der zweite Stator 31 durch eine Verschraubung 37 im Motorengehäuse 34 befestigt wird. Das Paket der Aktivteile der Axialflussmaschine mit Rotorwelle wird in Einbaurichtung 33 in das Motorgehäuse eingebracht und durch die dargestellten Positionierhilfen, beispielsweise den axialen Anschlag zwischen dem Stator 30 und dem Motorengehäuse 34, den Endanschlag des Lagers 36 im Motorgehäuse 34, und durch den Zug/Druck-Mechanismus bzw. das Zug- und/oder Druckelement, der/das durch die Verschraubung 37 eine Zugkraft auf den zweiten Stator 31 ausübt, in Position gebracht. Die Zugkraft überwindet zumindest teilweise die magnetische Anziehungskraft, die zwischen dem Stator 31 und dem Rotor 32 wirkt und erzeugt den Luftspalt 38 zwischen Rotor 32 und Stator 31. Der Stator 31 greift über eine Auskragung bzw. einen mittleren Teil auf das Lager 36, dass bei der Befestigung über die Verschraubung 37 am Motorengehäuse in die Lagerendposition gezogen bzw. gedrückt wird. Das Lager 36 wird einerseits über einen Wellenabsatz und andererseits über einen Sicherungsring auf der Welle 35 fixiert.

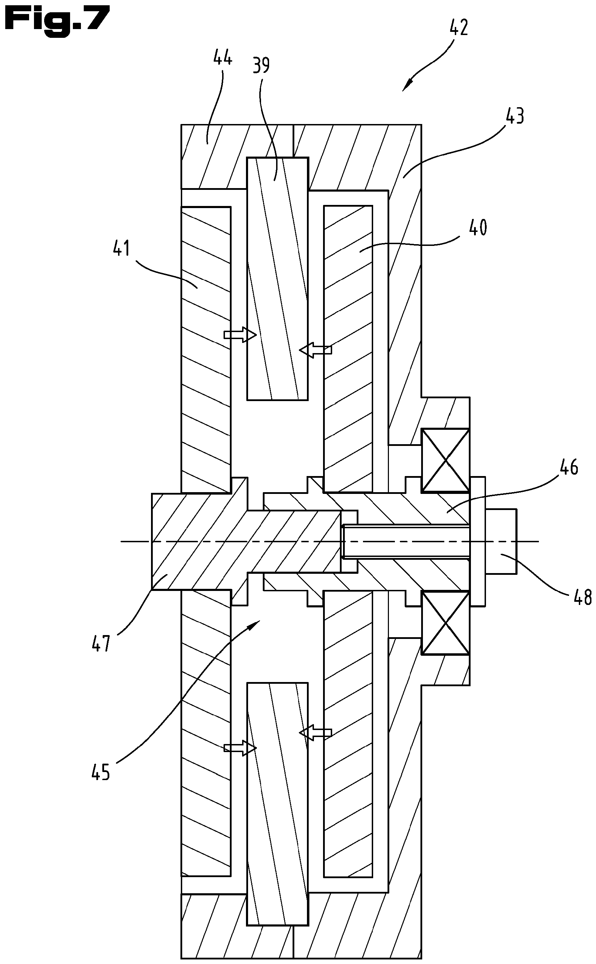

In Fig. 7 ist eine zweite Konfiguration zum Einbau einer weiteren Variante einer Axialflussmaschine mit einem Stator 39 und einem ersten Rotor 40 und einem zweiten Rotor 41 in ein Motorengehäuse 42 dargestellt. Das Motorengehäuse 42 ist dabei zweiteilig mit einem ersten Motorengehäuseteil 43 und einem zweiten Motorengehäuseteil 44 ausgeführt. Ebenso ist die Rotorwelle 45 mit einem ersten Rotorwellenteil 46 und einem zweiten Rotorwellenteil 47 ausgeführt. Beim Einbau der Axialflussmaschine in das Motorengehäuse 42 wird das Paket der Aktivteile vorzugsweise mit der Rotorwelle und dem Rotorwellenlager in das Gehäuse eingesetzt. Danach wird der zweite Motorengehäuseteil 44 auf das erste Motorengehäuseteil 43 aufgesetzt und an diesem befestigt. Durch eine Schraube 48 wird danach der erste Wellenteil 46 am Lager befestigt und durch das Schraubenende der zweite Wellenteil 47 vom ersten Wellenteil 6 bzw. aus dem ersten Wellenteil 46 in Richtung der Einschraubrichtung der Schraube 48 verschoben, wodurch sich die Abstände zwischen den Aktivteilen ausbilden und die entsprechenden Luftspalte zwischen den Rotoren und dem Stator, entgegen den magnetischen Anziehungskräften, wie schematisch dargestellt, ausbilden.

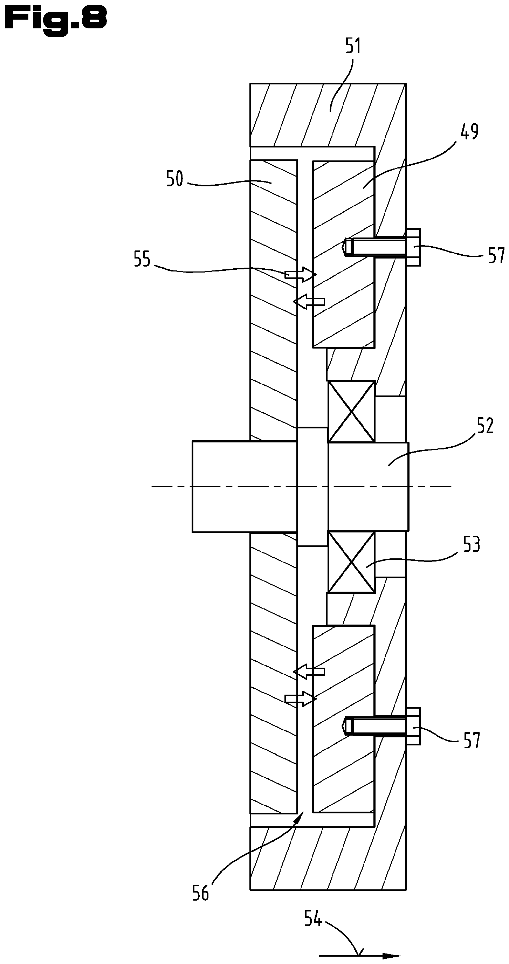

In Fig. 8 ist eine dritte Konfiguration einer Axialflussmaschine dargestellt. Ein Paket aus Rotor 50, Stator 49 und Rotorwelle 52, das durch die magnetischen Anziehungskräfte 55 in einem kompakten Paket transportiert wird, wird in das Motorengehäuse 51 eingesetzt. Dabei wird beispielsweise die Rotorwelle 52 in das Lager 53 im Motorengehäuse eingepresst, aber auch andere Varianten des Einbaus sind hier möglich. Ein Haltemechanismus ist in diesem Fall durch den axialen Anschlag der Rotorwelle am Lager 53 bzw. damit am Motorengehäuse 51, gewährleistet. Der Rotor 50 ist durch die Rotorwelle 52 in Richtung der axialen Einbaurichtung 54 fixiert. Der Stator 49 wird durch einen Zug/Druck-Mechanismus in Position gebracht. Dabei wird der Stator 49, der anfangs durch die magnetischen Anziehungskräfte 55 noch an dem Rotor 50 anliegt, durch die Zugkräfte der Verschraubung 57 vom Rotor 50 beanstandet, wobei die magnetischen Anziehungskräfte 55 zwischen Rotor 50 und Stator 49 zumindest teilweise überwunden werden. Damit wird der Luftspalt 56 zwischen Rotor 50 und Stator 49 eingestellt und schließlich der Stator 49 am Motorengehäuse 51 befestigt.

## Patentansprüche

1. Verfahren zum Einbau einer Axialflussmaschine (1) mit mindestens zwei Aktivteilen (18) in ein Motorengehäuse (8), wovon ein erstes Aktivteil als Rotor (3) mit einer Anzahl von Permanentmagneten und ein zweites Aktivteil als Stator (2) mit einer Anzahl von elektrischen Wicklungen eingerichtet ist, wobei der Rotor (3) und der Stator (2) einander benachbart und drehsicher, in einer Transportkonfiguration in einem platzsparenden, durch die magnetischen Anziehungskräfte der Permanentmagneten gebildeten, Paket, insbesondere in einem Stapel, angeordnet sind, wobei
der Rotor (3) und der Stator (2) in der Transportkonfiguration so unmittelbar benachbart angeordnet werden, dass zumindest in Teilbereichen des Rotors (3), der Rotor (3) den angrenzenden Stator (2), insbesondere spielfrei, ohne Luftspalt (16) berührt und nachfolgend das Paket in das Motorgehäuse (8) eingeführt und so in dem Motorengehäuse (8) positioniert wird, dass danach mittels einerseits einem an dem Motorengehäuse (8) angeordneten ersten mechanischen Anschlages (9) für zumindest eines der mindestens zwei Aktivteile (18) und andererseits einem damit zusammenwirkendem an dem Motorengehäuse (8) angeordneten ersten Zug- und/oder Druckelement, welches - gegen die magnetischen Anziehungskräfte der Permanentmagneten des Rotors (3) zum Stator (2) wirkend - den Abstand zwischen dem Rotor (3) und dem Stator (2) vergrößert, mindestens ein für den Betrieb der Axialflussmaschine erforderlicher Luftspalt (16) zwischen dem Rotor (3) und dem Stator (2) eingestellt wird.

2. Verfahren zum Einbau einer Axialflussmaschine (1) nach Anspruch 1 , **dadurch gekennzeichnet, dass** der Einbauraum des Motorengehäuse (8) für die Positionierung der Axialflussmaschine (1) topfförmig ausgeführt ist und das Paket der mindestens zwei Aktivteile (18) in der Transportkonfiguration von einer ersten Seite in den so gebildeten zumindest teilweise hohlförmigen Einbauraum des Motors so eingeführt wird, so dass zumindest der Bereich der Berührung zwischen Stator (2) und Rotor (3) seitlich von dem Motorengehäuse (8) abgedeckt ist.

3. Verfahren zum Einbau einer Axialflussmaschine (1) nach einem der vorhergehenden Ansprüche, **dadurch gekennzeichnet, dass** zumindest eines der mindestens zwei Aktivteile (18) der Axialflussmaschine (1) über das erste Zug- und/oder Druckelement in dem Motorengehäuse (8) befestigt wird.

4. Verfahren zum Einbau einer Axialflussmaschine (1) nach einem der vorhergehenden Ansprüche, **dadurch gekennzeichnet, dass** das erste Zug- und/oder Druckelement als Teil einer Schraubverbindung (14) ausgeführt ist.

5. Verfahren zum Einbau einer Axialflussmaschine (1) nach einem der vorhergehenden Ansprüche, **dadurch gekennzeichnet, dass** der Stator (2) über den ersten Anschlag (9) im Einbauraum des Motorengehäuses (8) positioniert wird und das erste Zug- und/oder Druckelement von der, der Seite des Einführens des Paketes in das Motorengehäuse (8), gegenüberliegenden Seite des Motorengehäuses (8) durch Ausübung einer Zug- und/oder Druckkraft auf den Rotor (3) den Abstand zwischen Rotor (3) und Stator (2) vergrößert, wodurch der mindestens eine für den Betrieb der Axialflussmaschine erforderliche Luftspalt (16) zwischen Stator (2) und Rotor (3) eingestellt wird.

6. Verfahren zum Einbau einer Axialflussmaschine (1) nach Anspruch 5, **dadurch gekennzeichnet, dass** die zumindest zwei Aktivteile (18) als weiteres Aktivelement ein Rückschlusselement (4) aufweisen, das in dem Paket der Transportkonfiguration auf der dem Stator (2) gegenüberliegenden Seite des Rotors (3) angeordnet wird und nach der Positionierung des Pakets im Motorengehäuse (8) das Rückschlusselement (4) durch das erste Zug- und/oder Druckelement und/oder ein weiteres Zug und/oder Druckelement von dem Rotor (3) entfernt wird, wodurch ein weiterer Luftspalt (17) des mindestens einen für den Betrieb der Axialflussmaschine (1) erforderliche Luftspalt (16) in diesem Fall zwischen Rotor (3) und Rückschlusselement (4) eingestellt wird.

7. Transportkonfiguration der Aktivteile einer Axialflussmaschine (1) zur Verwendung in einem Verfahren nach einem der vorhergehenden Ansprüche 1 bis 6, wobei der Rotor (3) und der Stator (2) einander benachbart und drehsicher, in einem platzsparenden, durch die magnetischen Anziehungskräfte der Permanentmagneten gebildeten, Paket, insbesondere in einem Stapel, angeordnet sind, wobei der Rotor (3) und der Stator (2) in der Transportkonfiguration so unmittelbar benachbart angeordnet werden, dass zumindest in Teilbereichen des Rotors (3), der Rotor (3) den angrenzenden Stator (2), insbesondere spielfrei, ohne Luftspalt (16) berührt.

8. Axialflussmaschine (1) in einem Motorgehäuse (8), welches über ein Verfahren nach einem der Ansprüche 1 bis 6 in das Motorgehäuse (8) eingebaut ist.

## Claims

1. A method for installing an axial flux machine (1) having at least two active parts (18) in a motor housing (8), of which active parts a first active part is configured as a rotor (3) having a number of permanent magnets and a second active part is configured as a stator (2) having a number of electrical windings, wherein the rotor (3) and the stator (2) are arranged adjacent to each other and in a rotation-proof manner, in a transport configuration in a space-saving package, in particular a stack, formed by means of the magnetic attractive forces of the permanent magnets, wherein
the rotor (3) and the stator (2) are arranged immediately adjacent to one another in the transport configuration such that at least in partial regions of the rotor (3), the rotor (3) contacts the adjacent stator (2), in particular without play, without an air gap (16), and subsequently the package is introduced into the motor housing (8) and positioned in the motor housing (8) such that subsequently, by means of, on the one hand, a first mechanical stop (9) arranged on the motor housing (8) for at least one of the at least two active parts (18), and, on the other hand, a first tension and/or compression element cooperating therewith and being arranged on the motor housing (8), which - acting against the magnetic attractive forces of the permanent magnets of the rotor (3) to the stator (2) - increases the distance between the rotor (3) and the stator (2), at least one air gap (16) required for the operation of the axial flux machine is set between the rotor (3) and the stator (2).

2. The method for installing an axial flux machine (1) according to claim 1, **characterized in that** the installation space of the motor housing (8) for positioning the axial flux machine is (1) pot-shaped and the package of the at least two active (18) parts in the transport configuration is inserted from a first side into the thus formed at least partially hollow installation space of the motor such that at least the region of contact between the stator (2) and the rotor (3) is covered laterally by the motor housing (8).

3. The method for installing an axial flux machine (1) according to one of the preceding claims, **characterized in that** at least one of the at least two active parts (18) of the axial flux machine (1) is fixed in the motor housing (8) via the first tension and/or compression element.

4. The method for installing an axial flux machine (1) according to one of the preceding claims, **characterized in that** the first tension and/or compression element is configured as a part of a screw connection (14).

5. The method for installing an axial flux machine (1) according to one of the preceding claims, **characterized in that** the stator (2) is positioned in the installation space of the motor housing (8) via the first stop (9) and the first tension and/or compression element enlarges the distance between the rotor (3) and the stator (2) by exerting a tension and/or compression force from the side of the motor housing (8) opposite to the side of the insertion of the package into the motor housing (8) onto the rotor (3), thereby adjusting the at least one air gap (16) between the stator (2) and the rotor (3) required for the operation of the axial flux machine.

6. The method for installing an axial flux machine (1) according to claim 5, **characterized in that** the at least two active parts (18), as a further active element, comprise a return element (4) arranged in the package of the transport configuration on the side of the rotor (3) opposite to the stator (2), and after positioning of the package in the motor housing (8), the return element (4) is removed from the rotor (3) by the first tension and/or compression element and/or a further tension and/or compression element, whereby a further air gap (17) of the at least one air gap (16) required for operation of the axial flux machine (1) is set in this case between the rotor (3) and the return element (4).

7. A transport configuration of the active parts of an axial flux machine (1) for the use in a method according to one of the preceding claims 1 to 6, wherein the rotor (3) and the stator (2) are arranged adjacent to each other and in a rotation-proof manner, in a space-saving package, in particular a stack, formed by means of the magnetic attractive forces of the permanent magnets, wherein the rotor (3) and the stator (2) are arranged immediately adjacent to one another in the transport configuration such that at least in partial regions of the rotor (3), the rotor (3) contacts the adjacent stator (2), in particular without play, without an air gap (16).

8. An axial flux machine (1) in a motor housing (8), which is installed in the motor housing (8) using a method according to one of claims 1 to 6.

## Revendications

1. Procédé d'installation d'une machine à flux axial (1) comprenant au moins deux parties actives (18) dans un carter de moteur (8), parmi lesquelles une première partie active est conçue sous la forme d'un rotor (3) comprenant une pluralité d'aimants permanents et une second partie active est configurée sous la forme d'un stator (2) comprenant une pluralité d'enroulements électriques, le rotor (3) et le stator (2) étant agencés l'un à côté de l'autre et bloqués en rotation l'un par rapport à l'autre dans une configuration de transport en un paquet peu encombrant, formé par les forces d'attraction magnétiques des aimants permanents, en particulier dans une pile, dans lequel dans la configuration de transport, le rotor (3) et le stator (2) sont agencés immédiatement adjacents de sorte qu'au moins dans des zones partielles du rotor (3), le rotor (3) entre en contact sans entrefer (16) avec le stator (2) adjacent, en particulier sans jeu, et le paquet est ensuite inséré dans le carter de moteur (8) et positionné ainsi dans le carter de moteur (8) de manière à ce que d'une part, une première butée mécanique (9) agencée au niveau du carter de moteur (8) pour au moins l'une des au moins deux parties actives (18) et, d'autre part, un premier élément de traction et/ou de pression agencé en coopération au niveau du carter de moteur (8), qui - agissant contre les forces d'attraction magnétique des aimants permanents du rotor (3) vers le stator (2) - augmente la distance entre le rotor (3) et le stator (2), au moins un entrefer (16) nécessaire au fonctionnement de la machine à flux axial est réglé entre le rotor (3) et le stator (2).

2. Procédé d'installation d'une machine à flux axial (1) selon la revendication 1, **caractérisé en ce que** l'espace d'installation du carter de moteur (8) pour le positionnement de la machine à flux axial (1) est réalisé en forme de pot et le paquet des au moins deux parties actives (18) dans la configuration de transport est introduit depuis un premier côté dans l'espace d'installation du moteur au moins partiellement creux ainsi formé de telle sorte qu'au moins la zone de contact entre le stator (2) et le rotor (3) est recouverte latéralement par le carter de moteur (8).

3. Procédé d'installation d'une machine à flux axial (1) selon l'une quelconque des revendications précédentes, **caractérisé en ce qu'**au moins l'une des au moins deux parties actives (18) de la machine à flux axial (1) est fixée dans le carter de moteur (8) par l'intermédiaire du premier élément de traction et/ou de pression.

4. Procédé d'installation d'une machine à flux axial (1) selon l'une quelconque des revendications précédentes, **caractérisé en ce que** le premier élément de traction et/ou de pression est réalisé sous la forme d'une partie d'une liaison à vis (14).

5. Procédé d'installation d'une machine à flux axial (1) selon l'une quelconque des revendications précédentes, **caractérisé en ce que** le stator (2) est positionné par l'intermédiaire de la première butée (9) dans l'espace d'installation du carter de moteur (8) et **en ce que** le premier élément de traction et/ou de pression augmente la distance entre le rotor (3) et le stator (2) à partir du côté du carter de moteur (8) opposé au côté de l'introduction du paquet dans le carter de moteur (8), en exerçant une force de traction et/ou de pression sur le rotor (3), ce qui permet de régler le au moins un entrefer (16) nécessaire au fonctionnement de la machine à flux axial entre le stator (2) et le rotor (3).

6. Procédé d'installation d'une machine à flux axial (1) selon la revendication 5, **caractérisé en ce que** les au moins deux parties actives (18) présentent comme élément actif supplémentaire un élément de retour (4) qui est agencé dans le paquet de la configuration de transport sur le côté du rotor (3) opposé au stator (2), et après le positionnement du paquet dans le carter de moteur (8), l'élément de retour (4) est retiré du rotor (3) par le premier élément de traction et/ou de pression et/ou par un élément de traction et/ou de pression supplémentaire, grâce à quoi un entrefer supplémentaire (17) du au moins un entrefer (16) nécessaire au fonctionnement de la machine à flux axial (1) est réglé dans ce cas entre le rotor (3) et l'élément de retour (4).

7. Configuration de transport des parties actives d'une machine à flux axial (1) à utiliser dans un procédé selon l'une quelconque des revendications précédentes 1 à 6, dans laquelle le rotor (3) et le stator (2) sont agencés l'un à côté de l'autre et bloqués en rotation, dans un paquet peu encombrant, formé par les forces d'attraction magnétiques des aimants permanents, en particulier dans une pile, dans laquelle le rotor (3) et le stator (2) sont agencés dans la configuration de transport immédiatement adjacents de sorte qu'au moins dans des zones partielles du rotor (3), le rotor (3) vient en contact sans entrefer (16) avec le stator (2) adjacent, en particulier sans jeu.

8. Machine à flux axial (1) dans un carter de moteur (8), qui est installée dans le carter de moteur (8) par l'intermédiaire d'un procédé selon l'une quelconque des revendications 1 à 6.
